# EUROPEAN PATENT APPLICATION

(11) **EP 4 557 259 A1**
(43) Date of publication of application: **21.05.2025**
(21) Application number: 23839813.5
(22) Date of filing: 14.06.2023
(51) Int. Cl.: G08G 1/0968, H04W 4/40, G08G 1/16

(54) **METHOD OF TRANSMITTING OR RECEIVING SIGNAL IN WIRELESS COMMUNICATION SYSTEM AND DEVICE THEREFOR**

(30) Priority: 13.07.2022 US 202263388657 P; 06.09.2022 KR 20220112998
(71) Applicant: LG Electronics Inc., Yeongdeungpo-gu Seoul 07336 (KR)
(72) Inventor: KWAK, Minsung, Seoul 06772 (KR); SEO, Hanbyul, Seoul 06772 (KR); BYUN, Jaihyun, Seoul 06772 (KR)
(74) Representative: Mooser, Sebastian Thomas
(86) International application number: PCT/KR2023/008180
(87) International publication number: WO 2024/014719

(57) **Abstract**

A method of transmitting a signal by a first station (STA) in an intelligent transport system (ITS) according to various embodiments may comprise the steps of: obtaining filter information related to configuration of perceived object information from a second STA; obtaining multiple detected data sets for each object by means of multiple sensors; and transmitting, to the second STA, a vehicle-to-everything (V2X) message including the perceived object information on the basis of the obtained multiple detected data sets and the filter information, wherein the first STA determines, on the basis of the filter information, whether to configure the perceived object information by fusing the obtained multiple detected data sets or configure the perceived object information by using the detected data set of each sensor without fusion.

## Description

### TECHNICAL FIELD

The present disclosure relates to signal transmission and reception in a wireless communication system, and more particularly, to a method of transmitting or receiving signals related to an intelligent transport system (ITS) and device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between UEs without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

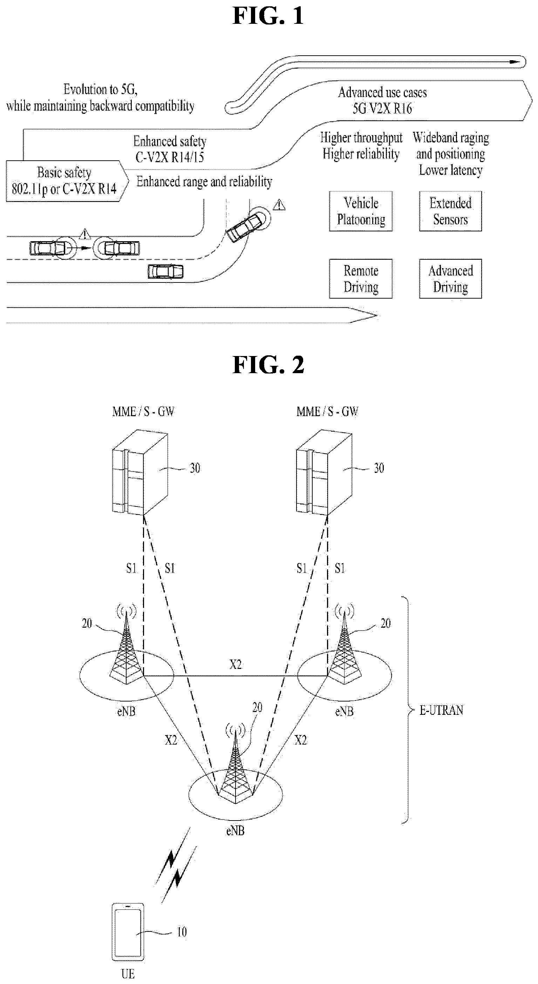

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

The present disclosure aims to provide a method and device for more accurately and efficiently transmitting and receiving vehicle-to-everything (V2X) messages in an intelligent transport system (ITS).

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of transmitting signals by a first station (STA) in an intelligent transport system (ITS). The method may include: acquiring filter information related to a configuration of perceived object information from a second STA; acquiring a plurality of detection data sets for each object through a plurality of sensors; and transmitting a vehicle-to-everything (V2X) message including the perceived object information to the second STA, based on the acquired plurality of detection data sets and the filter information. The first STA may determine, based on the filter information, whether to configure the perceived object information through fusion of the acquired plurality of detection data sets or configure the perceived object information with a detection data set for each sensor without the fusion.

In another aspect of the present disclosure, provided herein is a computer-readable recording medium having recorded thereon a program for executing the method described above.

In another aspect of the present disclosure, provided herein is a first STA configured to transmit signals in an ITS. The first STA may include: a transceiver; a plurality of sensors; and a processor. The processor may be configured to: acquire filter information related to a configuration of perceived object information from a second STA; acquire a plurality of detection data sets for each object through the plurality of sensors; and transmit a V2X message including the perceived object information to the second STA, based on the acquired plurality of detection data sets and the filter information. The first STA may determine, based on the filter information, whether to configure the perceived object information through fusion of the acquired plurality of detection data sets or configure the perceived object information with a detection data set for each sensor without the fusion.

The filter information may include information regarding a processing capability of the second STA.

Based on that the second STA has a higher processing capability than the first STA, the perceived object information may be configured with the detection data set for each sensor without the fusion of the acquired plurality of detection data sets.

Based on that the second STA has a lower processing capability than the first STA, the perceived object information may be configured through the fusion of the acquired plurality of detection data sets.

The filter information may include information regarding an area of interest of the second STA, information regarding a confidence level for object perception, information regarding a permissible error range between sensors, information regarding a sensor type, and information regarding whether the fusion is performed on the plurality of detection data sets.

The first STA may transmit a message including information regarding the plurality of sensors and information indicating that the first STA is capable of configuring the perceived object information without the fusion on the plurality of detection data sets.

The perceived object information configured with the detection data set for each sensor without the fusion may include information regarding a first object perceived by a first sensor among the plurality of sensors and information regarding the first object perceived by a second sensor among the plurality of sensors.

The information regarding the first object perceived by the first sensor may include a first sensor identifier (ID), and the information regarding the first object perceived by the second sensor may include a second sensor ID.

### ADVANTAGEOUS EFFECTS

According to an embodiment of the present disclosure, in an intelligent transport system (ITS), a transmitting ITS station (ITS-S) may transmit a vehicle-to-everything (V2X) message more accurately and efficiently by configuring the V2X message based on filter information received from a receiving ITS-S.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining the comparison between vehicle-to-everything (V2X) communication based on radio access technology (RAT) before New Radio (NR) and V2X communication based on NR.
FIG. 2 illustrates the structure of a Long-Term Evolution (LTE) system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a radio protocol architecture for SL communication.
FIG. 7 illustrates UEs performing V2X or SL communication.
FIG. 8 illustrates resource units for V2X or SL communication.
FIG. 9 illustrates an environment in which a transmitting intelligent transport system (ITS) station (ITS-S) and a receiving ITS-S exchange sensor information and object information.
FIGS. 10 to 12 illustrate various scenarios where sensors are attached.
FIGS. 13 and 14 illustrate examples of a V2X message configuration including sensor information and perceived object information.
FIG. 15 illustrates an example of a method by which a transmitting ITS-S transmits a V2X message.
FIG. 16 illustrates an example of a method by which a receiving ITS-S receives a V2X message.
FIG. 17 illustrates a flow of a V2X message transmission and reception method according to an embodiment.
FIG. 18 is a diagram for explaining power save mode (PSM) trigger conditions.
FIGS. 19 and 20 illustrate a relationship between the speed of a vulnerable road user (VRU) and a PSM transmission interval.
FIG. 21 illustrates a communication system applied to the present disclosure.
FIG. 22 illustrates wireless devices applicable to the present disclosure.
FIG. 23 illustrates another example of a wireless device to which the present disclosure is applied.
FIG. 24 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

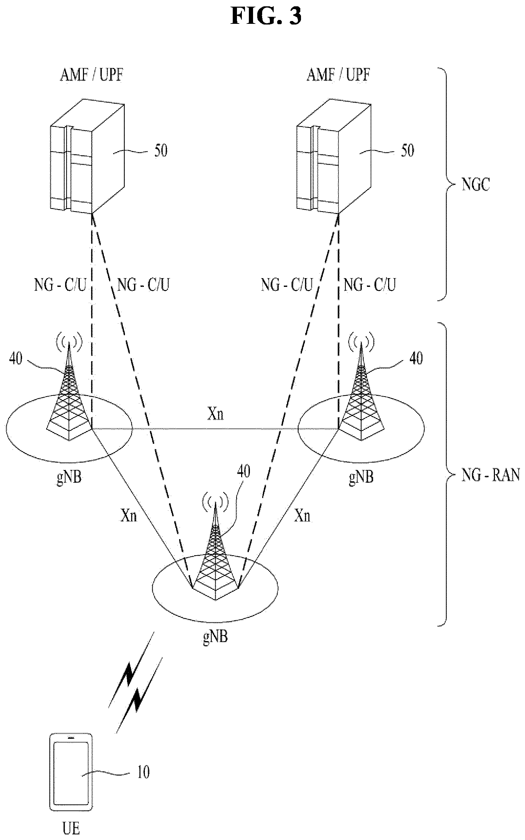

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

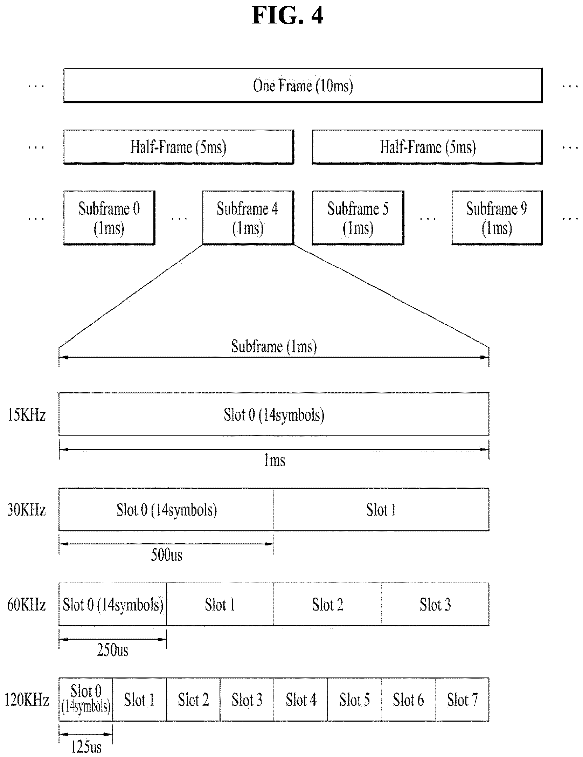

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame Nframe,uslot, and the number of slots per subframe Nsubframe,uslot according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

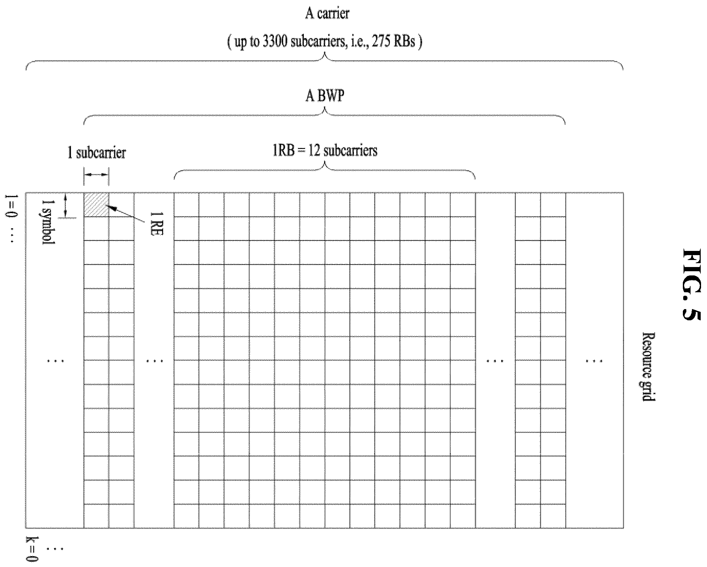

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

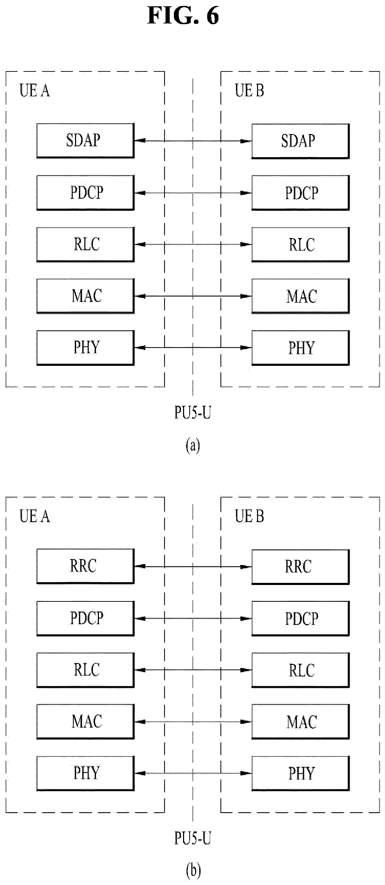

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

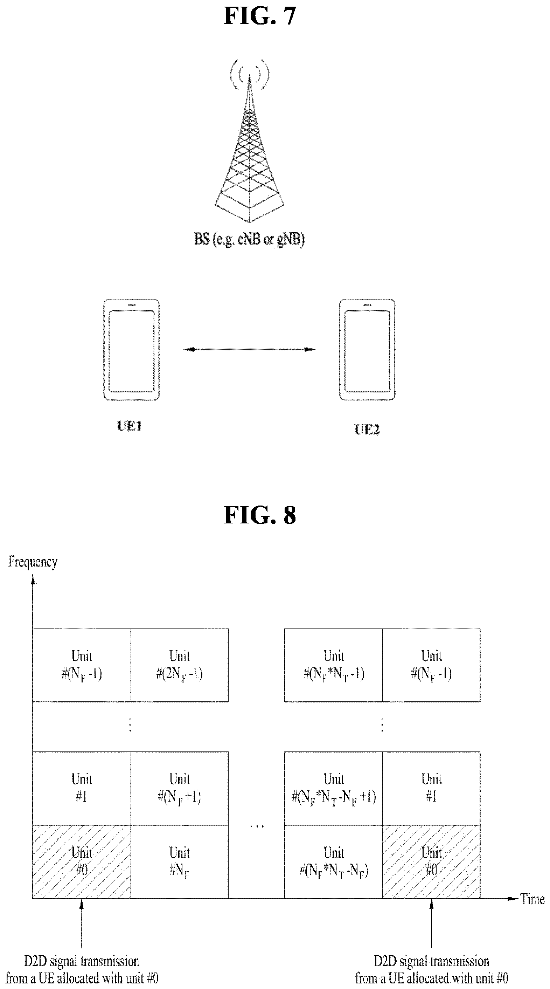

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool.

FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### <Object Detection and Sensing Data Provision Based on Multiple Sensors>

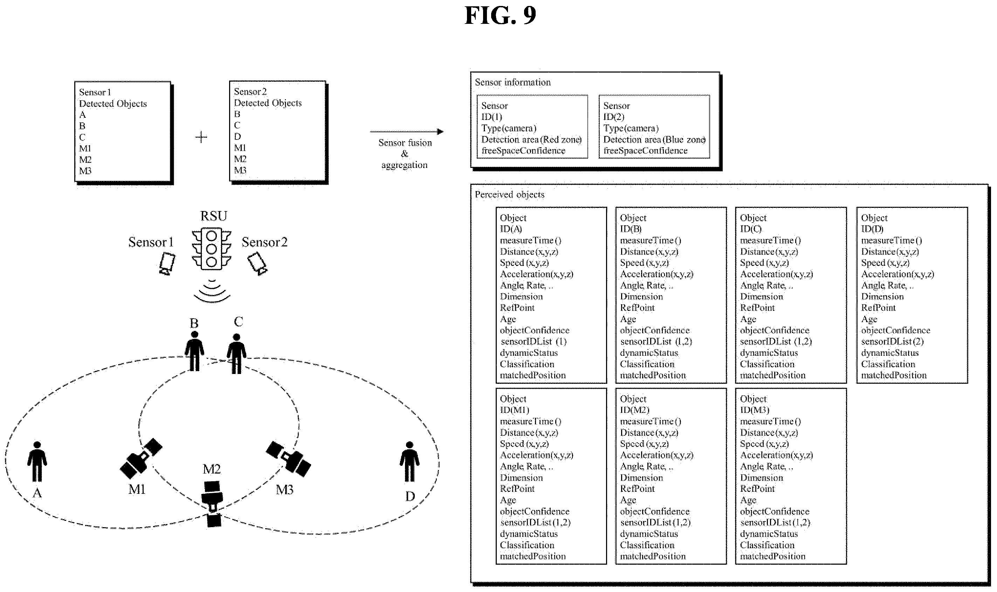

FIG. 9 illustrates an environment in which a transmitting intelligent transport system (ITS) station (ITS-S) and a receiving ITS-S exchange sensor information and object information.

Referring to FIG. 9, when sensors are attached to ITS-Ss (e.g., RSU, vehicle, etc.), each ITS-S may configure information perceived by the sensors thereof into V2X messages and transmit sensor/perceived information to neighboring ITS-Ss.

A single ITS-S may be equipped with one or more sensors, each with different detection capabilities and detection areas. Alternatively, a single sensor may be attached to one ITS-S. The detection areas of sensors of multiple ITS-S overlap, and thus a single object may be perceived by multiple sensors simultaneously. Additionally, if an ITS-S with sensors is moving, an object may be perceived by multiple other sensors.

When information about an object perceived by one or more sensors differs, the ITS-S performs analysis and sensor fusion on the object perceived by the sensors, extracts information about the object, and formats the information into a series of V2X messages for transmission. For example, in FIG. 9, objects B, C, M1, M2, and M3 are perceived by both sensor 1 and sensor 2. The ITS-S performs sensor fusion on information about object B detected by sensor 1 and information about object B detected by sensor 2 and extracts a single piece of object information related to Object ID (B). The ITS-S may similarly apply this process to other objects, such as objects C, M1, M2, and M3, to configure V2X messages.

When the transmitting ITS-S broadcasts a V2X message, ITS-Ss (e.g., on-board unit (OBU), vehicle ITS-S, or vulnerable road user (VRU)) passing near the transmitting ITS-S may receive the V2X message.

In the prior art, the transmitting ITS-S performs a series of sensor fusion processes to configure information about an object perceived by sensors thereof into a V2X message. Even if the sensor fusion processing capability of the receiving ITS-S is higher than that of the transmitting ITS-S, the receiving ITS-S has no choice but to rely on the information about the perceived object included in the received V2X message to predict collision risks. In addition, the receiving ITS-S needs to compensate for possible errors or reductions in information that may occur during the sensor fusion processes of the transmitting ITS-S.

To address such issues, it is proposed as an example of the present disclosure that when one or more sensors are installed on a single ITS-S or on multiple separate ITS-S, the receiving ITS-S may request information about an object perceived by the sensors based on the processing capabilities thereof. Based on the request from the receiving ITS-S, the transmitting ITS-S may configure a V2X message to include all information about the object perceived by the one or more sensors, without performing a sensor fusion process, and transmits the message to the receiving ITS-S. Since the receiving ITS-S receives and processes the information regarding the object perceived by the sensors according to its own processing capabilities, it may achieve higher reliability and accuracy, compared to when the receiving ITS-S receives a V2X message containing sensor fusion results from the transmitting ITS-S. As described above, the present disclosure proposes a method of applying transmission and reception of detected information regarding an object perceived by one or more sensors flexibly depending on the processing capabilities of an ITS-S to reduce collision risks based on the information.

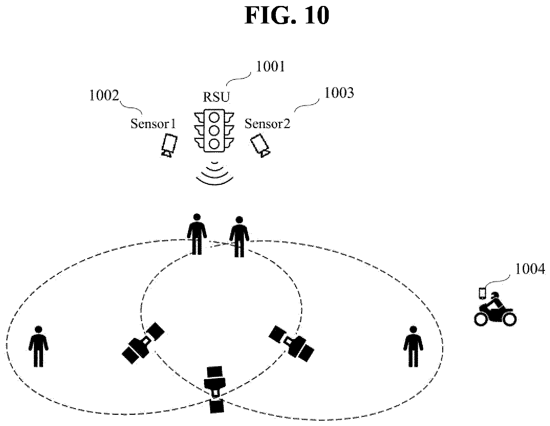

Hereinafter, various scenarios with attached sensors will be described with reference to FIGS. 10 to 12.

Referring to FIG. 10, when one or more sensors (1002, 1003) are attached to a single ITS-S (1001), if a transmitting ITS-S (100) generates a V2X message including object information perceived/detected by the sensors (1002, 1003) and transmits the V2X message, another ITS-S (1004) may receive the V2X message.

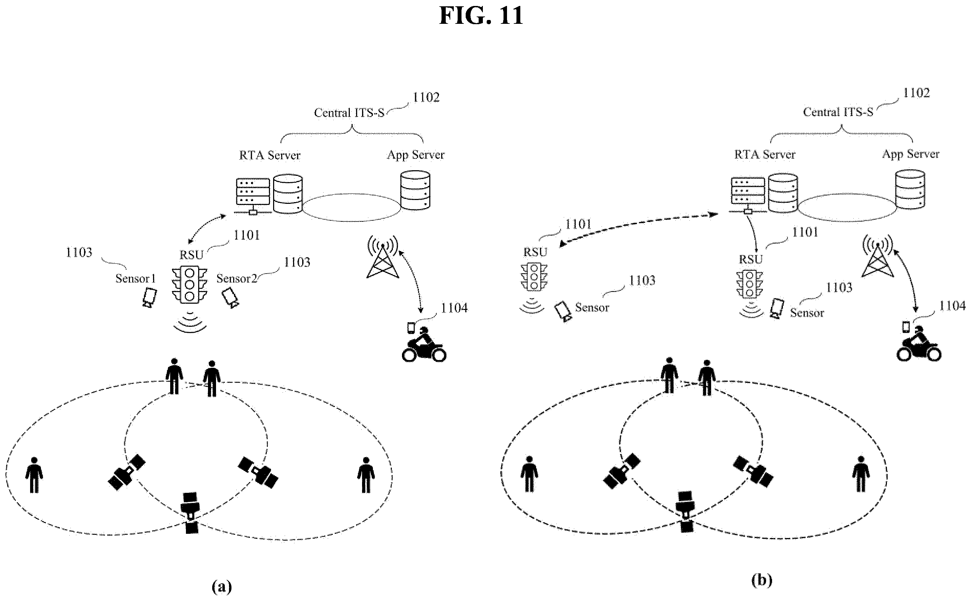

Referring to FIG. 11, one or more sensors (1103) may be attached to a single ITS-S (1101), and the ITS-S (1101) may be connected to a Central ITS-S (1102). The Central ITS-S (1102) may recognize that the connected ITS-S (1101) has the attached sensors (1103) and request information perceived/detected by the sensors (1103) from the ITS-S (1101) to obtain the information. The Central ITS-S (1102) may then provide the sensor-detected object information received from the ITS-S (1101) to another connected ITS-S (1104).

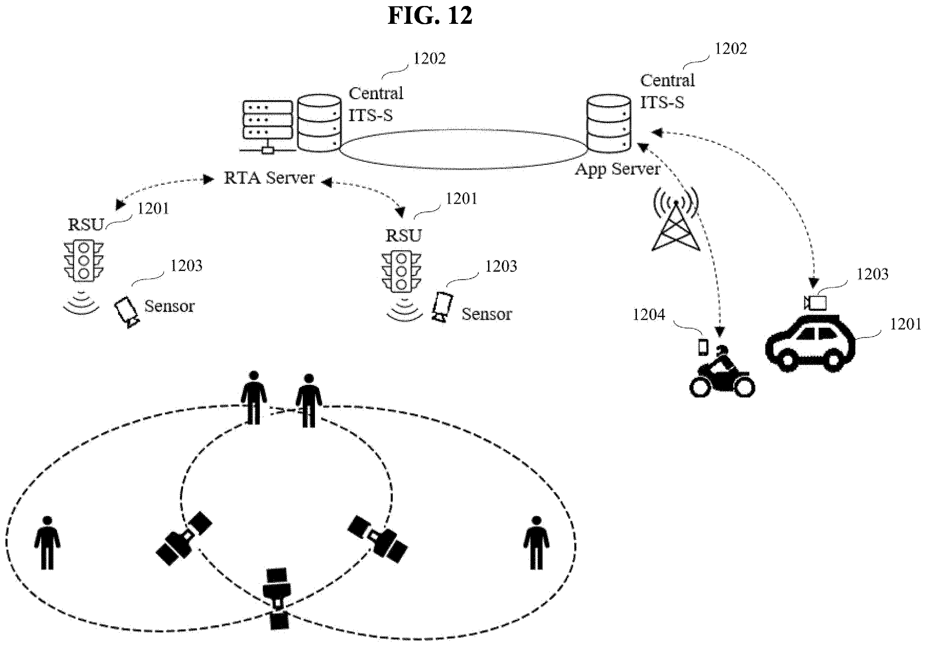

Referring to FIG. 12, a transmitting ITS-S (1201) with one or more attached sensors (1203) may be connected to a server, such as a Central ITS-S (1202), capable of storing and managing sensor information. A receiving ITS-S (1204), which receives sensor information, may also be connected to the server, such as the Central ITS-S (1202). The Central ITS-S (1202), which is the server that stores, processes, and manages sensor information, may function as either a transmitting or receiving ITS-S. When functioning as a receiving ITS-S, the Central ITS-S may acquire and comprehensively process sensor-perceived information if sensors are attached to another connected ITS-S (e.g., a Central ITS-S functioning as a transmitting ITS-S and/or the transmitting ITS-S 1201).

### [Filtering Conditions for Sensor-Recognized Object Information]

The receiving ITS-S provides the transmitting ITS-S with a request that includes the processing capabilities of the receiving ITS-S and requirements (e.g., filtering conditions) for information required by the receiving ITS-S. Upon receiving the request, the transmitting ITS-S configures information regarding an object perceived by its sensors according to the requirements and transmits the information as a V2X message.

The transmitting ITS-S configures sensor information, which the transmitting ITS-S is capable of perceiving, into a V2X message, enabling the nearby receiving ITS-S to recognize the coverage area and type of the sensors, as well as whether the sensors are in motion. Additionally, the transmitting ITS-S may include in the V2X message whether transmitting ITS-S is capable of receiving a request for requirements regarding sensing information from the receiving ITS-S, along with the sensor information.

The filtering conditions for sensor-perceived object information that the receiving ITS-S is capable of requesting from the transmitting ITS-S may include at least one of the following:
(1) Area
   - The receiving ITS-S may request to provide sensor-perceived information regardingly for an area of interest specified by the receiving ITS-S.
(2) Confidence level
   - The receiving ITS-S may request to provide only information perceived by sensors that is more than or equal to a specific confidence level (e.g., confidence threshold).
   - If the sensor-perceived object information exceeds the specified confidence level, the filtering conditions may further include whether to transmit all the information or only the top-ranked (e.g., top N) information.
(3) Permissible error range when information perceived by each sensor differs for same object
   - For example, the positional error measured by each sensor needs to be within X meters (m).
   - The angle of movement direction needs to have a difference less than or equal to Y°.
   - The difference in movement speed needs to be less than or equal to Z m/s.
(4) Sensor type
   - Since each sensor type may have different characteristics for perceiving and detecting objects, the receiving ITS-S may provide a preferred sensor type thereof to the transmitting ITS-S to receive only the desired type of sensor information.
   - For example, if the transmitting ITS-S is equipped with one or more sensors such as a Light Detection and Ranging (LIDAR) sensor and a camera type of sensor, if the receiving ITS-S that prioritizes classification information and has sufficient processing capabilities, the receiving ITS-S may request information perceived by a camera. If the receiving ITS-S only considers the presence or absence of objects to be important, the receiving ITS-S may request the transmitting ITS-S to provide only information perceived by the LIDAR.
(5) Whether transmitting ITS-S performs fusion processing of multi-sensor-perceived information.
   - The receiving ITS-S may request the transmitting ITS-S to configure and transmit a V2X message including all information about an object perceived by sensors without performing sensor fusion. In this case, upon receiving the V2X message, the receiving ITS-S may directly analyze the information regarding the object perceived by the sensors and assess collision risks. From the perspective of the receiving ITS-S, receiving two pieces of information obtained from different sensors for the same object may ensure more stable processing.
   - The receiving ITS-S may request the transmitting ITS-S, which has one or more sensors, to perform sensor fusion on sensor-perceived information and configure/transmit the sensor-perceived information as a V2X message.
   - The receiving ITS-S may determine and request whether the transmitting ITS-S needs to perform sensor fusion depending on the battery status, processing capability, and sensor status (e.g., whether the receiving ITS-S has sensors or not) of the receiving ITS-S. Each of the transmitting ITS-S and the receiving ITS-S may function as a different server (e.g., Central ITS-S).

According to an embodiment, whether sensor fusion is performed may be determined based on object information perceived and detected by sensors. The following examples may be considered.
(i) When the speed of an object or ITS-S exceeds a specific threshold, the information is configured into a V2X message without performing the sensor fusion to reduce latency.
(ii) When the risk level of the object or ITS-S (e.g., VRU) exceeds a specific threshold, the information is configured into a V2X message without performing the sensor fusion to reduce latency.
(iii) When the confidence level provided by each sensor is higher than a specific threshold (e.g., 99.5% or above), the information is configured into a V2X message without performing the sensor fusion to reduce latency.
(iv) If the receiving ITS-S transmits a request regarding whether to perform the sensor fusion to the transmitting ITS-S, the transmitting ITS-S may determine to accept or reject the request based on the aforementioned object detection information criteria and notify the receiving ITS-S of the determination.
(v) For a single object with a volume more than or equal to a specific threshold, if multiple sensors detect different volume results from various angles, the transmitting ITS-S configures a V2X message including all the different measurements without performing the sensor fusion, thereby allowing the receiving ITS-S to perceive the volume of the object detected from each angle. Information about the measurement angles of each sensor may be provided along with the volume results measured by each sensor.

### [Example of V2X Message Configuration]

For example, to enable a receiving ITS-S to perform sensor fusion, object information perceived by one or more sensors may be configured into a V2X message as follows.
(1) Provision of multiple pieces of detection information for single object.
   - To configure a V2X message, the transmitting ITS-S analyzes object information perceived by different sensors and determines whether the object information is related to the same object, which may cause latency. If the transmitting ITS-S determines that the information from different sensors is related to the same object despite discrepancies, the transmitting ITS-S should be able to provide a confidence level for the determination that the information is related to the same object. Additionally, when the perception information for the same object is provided by each sensor, the transmitting ITS-S also needs to provide a confidence level for the perception result of each sensor.
   - The receiving ITS-S analyzes the received V2X message. If the results from multiple sensors differ for the same object, the receiving ITS-S may determine the collision risk level, object presence, and object location depending on the processing capabilities thereof based on the objective object perception information provided by each sensor.
(2) Compression and provision of multiple pieces of detection information for single object
   - To configure a V2X message, the transmitting ITS-S analyzes object information perceived by different sensors and determines whether the object information is related to the same object, which may cause latency.
   - Information detected by multiple sensors for a single object may include common elements as well as differing elements. The transmitting ITS-S may compress the common elements and transmit the compressed common elements in the V2X message. For elements that differ between sensors, the transmitting ITS-S represents an element with the highest confidence level as the most reliable measurement from the transmitting ITS-S. In addition, the transmitting ITS-S may include information detected by other sensors as auxiliary data in the V2X message. The auxiliary data may reduce the size of the V2X message by using offset values (e.g., differences in distance or speed) instead of using the original data format.
   - The receiving ITS-S may analyze the received V2X message to identify a value with the highest confidence level among the results detected by multiple sensors for a single object, as well as the results detected by other sensors. Based on the objective object perception information provided by the transmitting ITS-S, the receiving ITS-S may determine the collision risk level, object presence, and object location depending on the processing capabilities thereof.
(3) Provision of all information by assigning unique ID to each sensor and assigning object IDs to detected objects for each sensor ID.
   - The transmitting ITS-S does not determine whether objects perceived by each sensor are the same. Instead, the transmitting ITS-S includes all perceived and detected object information in a V2X message and transmits the V2X message.
   - Upon receiving the V2X message, the receiving ITS-S determine whether the objects included in the V2X message are the same based on the processing capabilities thereof and determine the object location, movement, and collision risk level.

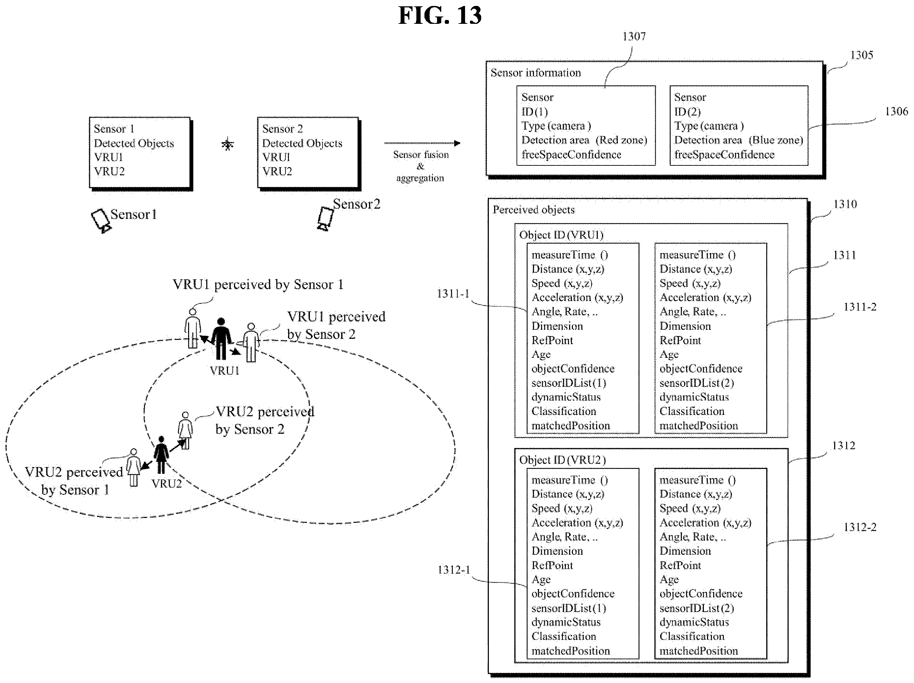

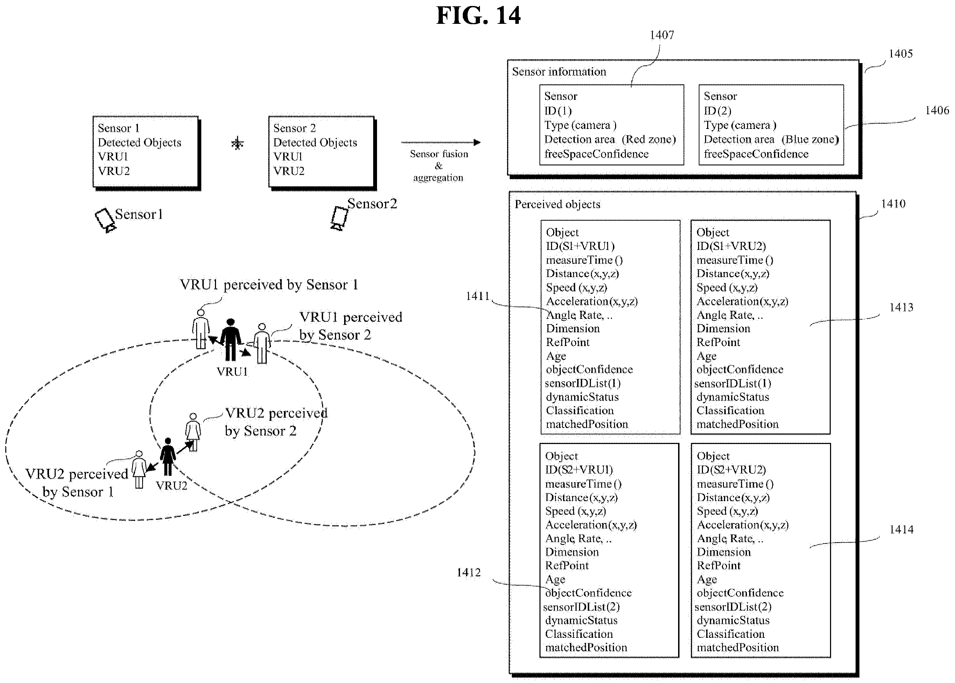

FIGS. 13 and 14 illustrate examples of a V2X message configuration including sensor information and perceived object information.

A transmitting ITS-S is equipped with sensor 1 and sensor 2, and sensor information (1305/1405) included in a V2X message includes sensor 1 information (1307/1407) and sensor 2 information (1306/1406).

It is assumed that objects VRU 1 and VRU 2 are perceived by sensor 1 and sensor 2. However, information about VRU 1 perceived by sensor 1 may differ at least partially from information about VRU 1 perceived by sensor 2. Similarly, information about VRU 1 perceived by sensor 2 may differ at least partially from information about VRU 2 perceived by sensor 2.

Referring to FIG. 13, perceived object information (1310) includes perception information 1311 on object VRU1 and perception information regarding 1312 object VRU2. The perception information 1311 on object VRU1 includes object VRU1 information 1311-1 perceived by sensor 1 and object VRU1 information 1311-2 perceived by sensor 2. The perception information 1312 on object VRU2 includes object VRU2 information 1312-1 perceived by sensor 1 and object VRU2 information 1312-2 perceived by sensor 2. In FIG. 13, the transmitting ITS-S may determine the identity of objects. For the same object, the transmitting ITS-S may configure information for each sensor.

Referring to FIG. 14, the transmitting ITS-S may individually configure object information perceived by each sensor within a V2X message without determining the identity of objects. As a result, perceived object information (1410) separately includes object VRU1 information 1411 perceived by sensor 1, object VRU2 information 1413 perceived by sensor 1, object VRU1 information 1412 perceived by sensor 2, and object VRU2 information 1414 perceived by sensor 2.

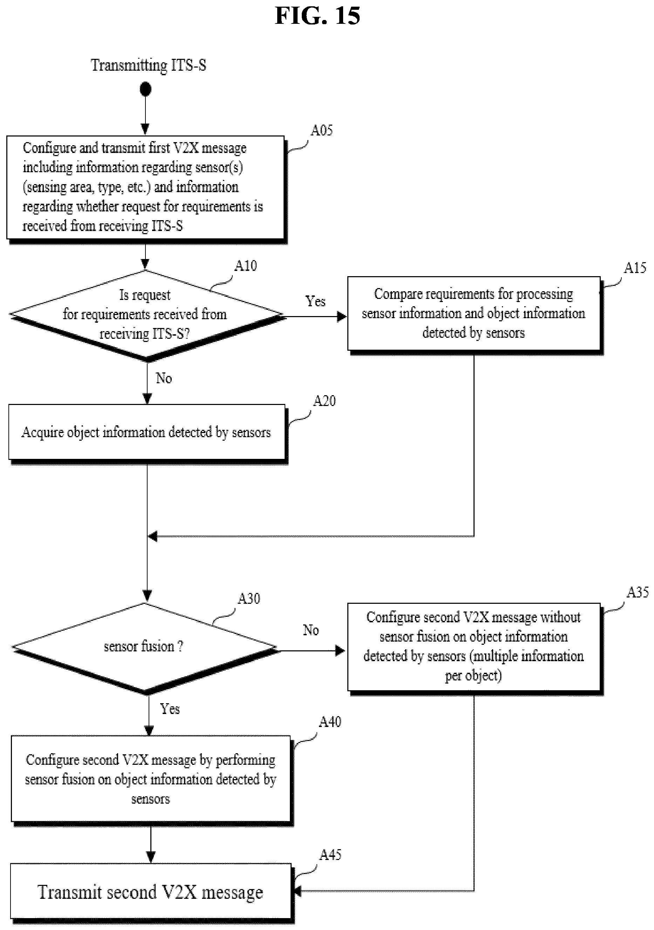

FIG. 15 illustrates an example of a method by which a transmitting ITS-S transmits a V2X message.

The transmitting ITS-S may transmit a first V2X message (A05). The first V2X message may include information regarding sensors installed on the transmitting ITS-S, for example, information regarding the sensing areas and types of each sensor. Additionally, the first V2X message may include information regarding whether the transmitting ITS-S is capable of receiving a request for requirements (filtering) from a receiving ITS-S (e.g., whether the transmitting ITS-S supports configuring a second V2X message based on the requirements).

When the transmitting ITS-S receives the request for the requirements from the receiving ITS-S (Yes in A10), the transmitting ITS-S compares the request for sensor information processing from the receiving ITS-S with object information that the transmitting ITS-S detects through sensors thereof. The transmitting ITS-S may then determine whether the object information that the transmitting ITS-S detects matches the request from the receiving ITS-S.

Based on the result of determining whether to proceed with sensor fusion (A30), the transmitting ITS-S may configure a second V2X message without performing the sensor fusion on the object information detected by the sensors (A35) or configure the second V2X message by performing the sensor fusion on the detected object information (A40).

The transmitting ITS-S transmits the second V2X message (A45).

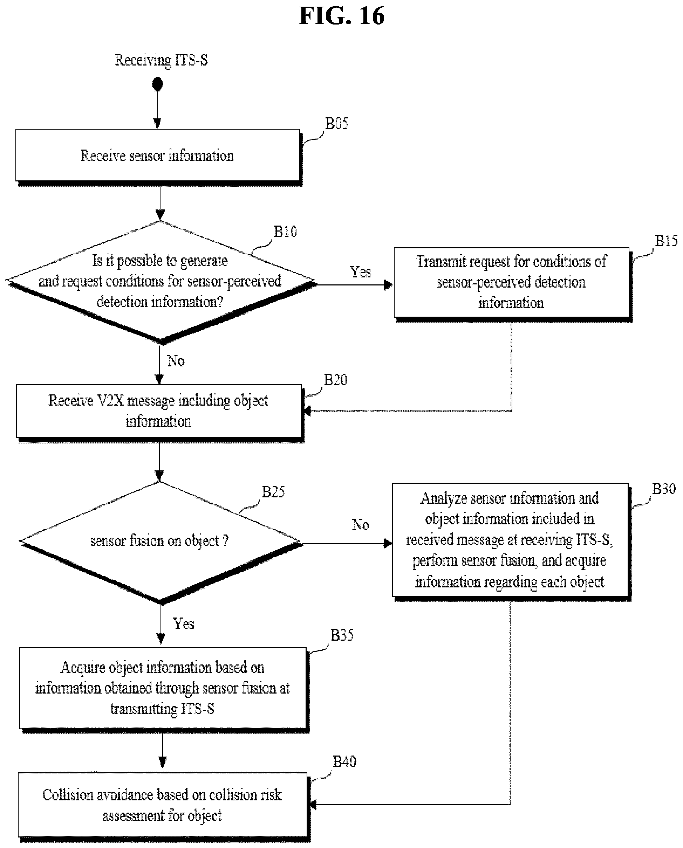

FIG. 16 illustrates an example of a method by which a receiving ITS-S receives a V2X message.

The transmitting ITS-S may receive information regarding sensors installed on a transmitting ITS-S, for example, information regarding the sensing areas and types of each sensor (B05). The transmitting ITS-S may also receive from the transmitting ITS-S information regarding whether the transmitting ITS-S is capable of receiving a request for requirements (filtering) from the receiving ITS-S (e.g., whether the transmitting ITS-S supports configuring a second V2X message based on the requirements).

If the transmitting ITS-S is capable of receiving the request for the requirements (filtering) from the receiving ITS-S (Yes in B10), the receiving ITS-S transmits to the transmitting ITS-S the request for the requirements regarding sensor-perceived detection information (B15).

The receiving ITS-S receives the V2X message from the transmitting ITS-S (B20).

The receiving ITS-S determines whether to proceed with sensor fusion (B25).

If the receiving ITS-S performs the sensor fusion, the receiving ITS-S analyzes sensor information and object information included in the received V2X message and obtains information regarding each object by performing the sensor fusion thereon (B30).

If the receiving ITS-S does not perform the sensor fusion, the receiving ITS-S obtains object information based on information regarding which the transmitting ITS-S performs the sensor fusion (B35).

The receiving ITS-S may perform a collision risk assessment for the object to avoid a collision (B40).

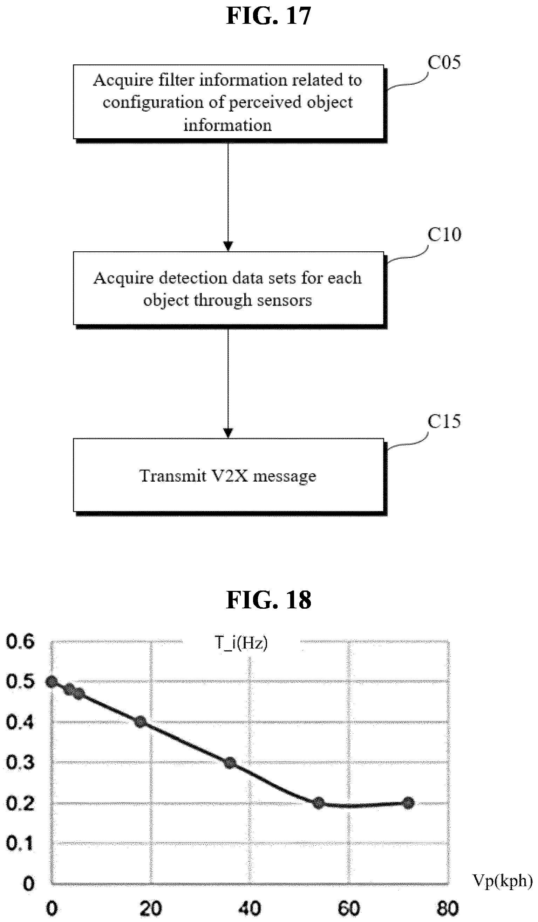

FIG. 17 illustrates a flow of a V2X message transmission and reception method according to an embodiment.

Referring to FIG. 17, a first station (STA) acquires filter information related to a configuration of perceived object information from a second STA (C05).

The first STA may acquire a plurality of detection data sets for each object through a plurality of sensors (C10).

The first STA may transmit a V2X message including the perceived object information to the second STA, based on the acquired plurality of detection data sets and the filter information (C15).

The first STA may determine, based on the filter information, whether to configure the perceived object information through fusion of the acquired plurality of detection data sets or configure the perceived object information with a detection data set for each sensor without the fusion.

For example, the filter information may include information regarding a processing capability of the second STA. Based on that the second STA has a higher processing capability than the first STA, the perceived object information may be configured with the detection data set for each sensor without the fusion of the acquired plurality of detection data sets. Based on that the second STA has a lower processing capability than the first STA, the perceived object information may be configured through the fusion of the acquired plurality of detection data sets.

For example, the filter information may include information regarding an area of interest of the second STA, information regarding a confidence level for object perception, information regarding a permissible error range between sensors, information regarding a sensor type, and information regarding whether the fusion is performed on the plurality of detection data sets.

The first STA may transmit a message including information regarding the plurality of sensors and information indicating that the first STA is capable of configuring the perceived object information without the fusion on the plurality of detection data sets.

The perceived object information configured with the detection data set for each sensor without the fusion may include information regarding a first object perceived by a first sensor among the plurality of sensors and information regarding the first object perceived by a second sensor among the plurality of sensors.

The information regarding the first object perceived by the first sensor may include a first sensor ID, and the information regarding the first object perceived by the second sensor may include a second sensor ID.

### <Power Save Mode (PSM) Transmission Timing>

### Transmission Timing (TXTIM)

At the start of a system device, an arbitrary epoch is selected for a first scheduled PSM transmission based on Ti. Each subsequent PSM may be scheduled at a nominal rate of 1/Ti or at a nominal rate defined by a VRU device based on the corresponding epoch.

The VRU device may modify each PSM transmission by adding a value, obtained from a uniform distribution defined over a range from -vTxRand to +vTxRand, to each scheduled transmission time calculated before all transmissions.
- vruTxRand = 5ms

The VRU device may adjust a PSM transmission pattern and transmission rate between vruPSMTxRateMin and vruPSMTxRateMax.
- vruPSMTxRateMin = 1Hz
- vruPSMTxRateMax = 10Hz

The VRU device may perform the PSM transmission using Transmission Timing Mode 1 or Transmission Timing Mode 2.

### Transmission Timing Mode 1

A PSM transmission interval Ti is calculated based on the speed of a VRU (Vp). Transmission Timing Mode 1 is suitable for stationary and moving VRUs as well as for VRUs moving at higher speeds, such as fast-moving bicycle riders sharing a road with vehicles. Transmission Timing Mode 1 handles dynamic events in a timely manner through communication between the VRU and surrounding vehicles.

When Vp represents the speed of the VRU, if Vp is greater than or equal to vruPSMTxThreshold, Ti is equal to vruHighSpdPSMTiCons. If Vp is less than vruPSMTxThreshold, Ti is Ceiling [(- vruPSMTiCoeff * Vp + 0.5) * 100] / 100 [in/s].
- vruPSMTxThreshold = 15 m/s
- vruHighSpdPSMTiConst = 0.2 [in/s]
- vruPSMTiCoeff = 0.02

### Bosch analysis

FIG. 18 is a diagram for explaining PSM trigger conditions. In FIG. 18, Ti is a base value used to select a random epoch for a PSM transmission. The PSM transmission rate may be calculated as a nominal rate of 1/Ti. Since a VRU is not as fast as a vehicle, the speed of the VRU may be represented in units of "m/s" instead of "kph."

On the other hand, further discussion is needed on whether the message transmission frequency needs to decrease for faster movements, whether the speed needs to be the sole criterion for message updates, and the appropriateness of the 0.5Hz limit (in cases where the VRU has a similar speed to the vehicle and is more dynamic, the VRU should be capable of transmitting as quickly as the vehicle.)

When Vp represents the speed of the VRU, if Vp is greater than or equal to vruPSMTxThreshold, Ti is equal to vruHighSpdPSMTiCons. If Vp is less than vruPSMTxThreshold, Ti is Ceiling [(- vruPSMTiCoeff * Vp + 0.5) * 100] / 100 [in/s].

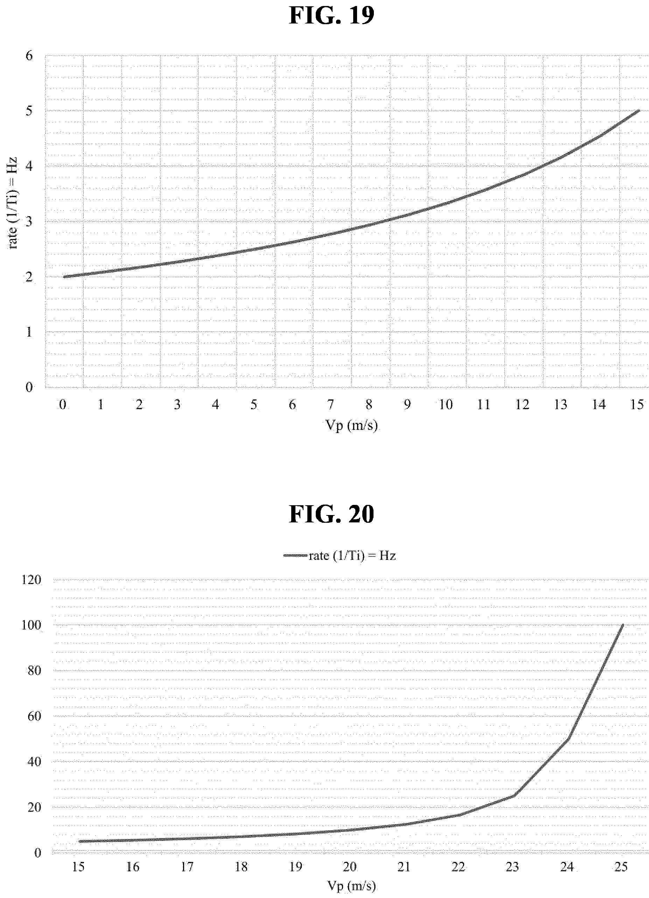

Table 5 shows the values of Vp and Ti. FIG. 19 illustrates Table 5.

**[Table 5]**

| Vp (m/s) | Vp (k/h) | ceiling | Ti [in/s] | rate (1/Ti) = Hz |
|---|---|---|---|---|
| 0.0 | 0.0 | 50 | 0.50 | 2 |
| 1.0 | 3.6 | 48 | 0.48 | 2.083333333 |
| 2.0 | 7.2 | 46 | 0.46 | 2.173913043 |
| 3.0 | 108 | 44 | 0.44 | 2.272727273 |
| 4.0 | 14.4 | 42 | 0.42 | 2.380952381 |
| 5.0 | 18.0 | 40 | 0.40 | 2.5 |
| 6.0 | 21.6 | 38 | 0.38 | 2.631578947 |
| 7.0 | 25.2 | 36 | 0.36 | 2.777777778 |
| 8.0 | 28.8 | 34 | 0.34 | 2.941176471 |
| 9.0 | 32.4 | 32 | 0.32 | 3.125 |
| 10.0 | 36.0 | 30 | 0.30 | 3.333333333 |
| 11.0 | 39.6 | 28 | 0.28 | 3.571428571 |
| 12.0 | 43.2 | 26 | 0.26 | 3.846153846 |
| 13.0 | 46.8 | 24 | 0.24 | 4.166666667 |
| 14.0 | 50.4 | 22 | 0.22 | 4.545454545 |
| 15.0 | 54.0 | 20 | 0.20 | 5 |

### Proposal 1

The VRU device may adjust the PSM transmission pattern and transmission rate between vruPSMTxRateMin and vruPSMTxRateMax (where vruPSMTxRateMin = 1Hz and vruPSMTxRateMax = 10Hz). Accordingly, for VRUs moving faster than 15m/s, a transmission timing between 5Hz and 10Hz needs to be considered.

When calculating the transmission timing for a VRU moving faster than 15m/s using the method defined in Transmission Timing Mode 1, the transmission timing for a VRU moving at a speed of 20m/s (72kph) or higher may exceed vruPSMTxRateMax (10Hz).

Therefore, it is proposed to define vruPSMTxThreshold as "20m/s" and vruHighSpdPSMTiConst [in/s] as "0.1".

Table 6 shows the values of Vp and Ti according to Proposal 1. FIG. 20 illustrates Table 6.

**[Table 6]**

| Vp (m/s) | Vp (k/h) | ceiling | Ti [in/s] | rate (1/Ti) = Hz |
|---|---|---|---|---|
| 15.0 | 54.0 | 20 | 0.20 | 5 |
| 160 | 57.6 | 18 | 0.18 | 5.555555556 |
| 17.0 | 61.2 | 16 | 0.16 | 6.25 |
| 18.0 | 64.8 | 14 | 0.14 | 7.142857143 |
| 19.0 | 68.4 | 12 | 0.12 | 8.333333333 |
| 20.0 | 72.0 | 10 | 0.10 | 10 |
| 21.0 | 75.6 | 8 | 0.08 | 12.5 |
| 22.0 | 79.2 | 6 | 0.06 | 16.66666667 |
| 23.0 | 82.8 | 4 | 0.04 | 25 |
| 24.0 | 86.4 | 2 | 0.02 | 50 |
| 24.5 | 88.2 | 1 | 0.01 | 100 |

### Proposal 2

It needs to be discussed whether the PSM should be transmitted at a minimum of 2Hz even for stationary VRUs (0m/s speed). Based on that the VRU device is capable of adjusting the PSM transmission pattern and transmission rate between vruPSMTxRateMin (1Hz) and vruPSMTxRateMax (10Hz), the formula defined in Mode 1 may not be suitable for stationary VRUs or VRUs moving slower than 0.5m/s.

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

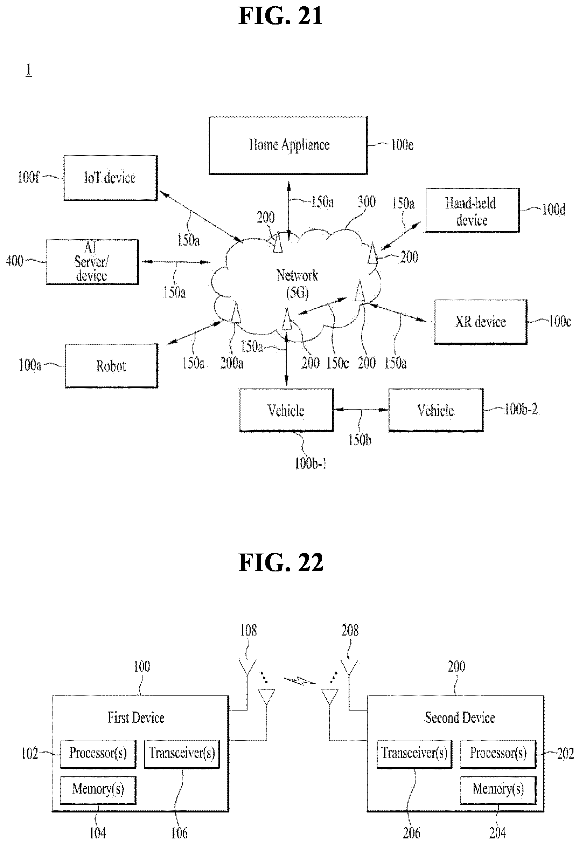

FIG. 21 illustrates a communication system applied to the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 22 illustrates a wireless device applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, a UE may include the processor(s) 102 connected to the RF transceiver and the memory(s) 104. The memory(s) 104 may include at least one program for performing operations related to the embodiments described above with reference to FIGS. 11 to 27.

Alternatively, a chipset including the processor(s) 102 and memory(s) 104 may be configured. The chipset may include: at least one processor; and at least one memory operably connected to the at least one processor and configured to, when executed, cause the at least one processor to perform operations.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

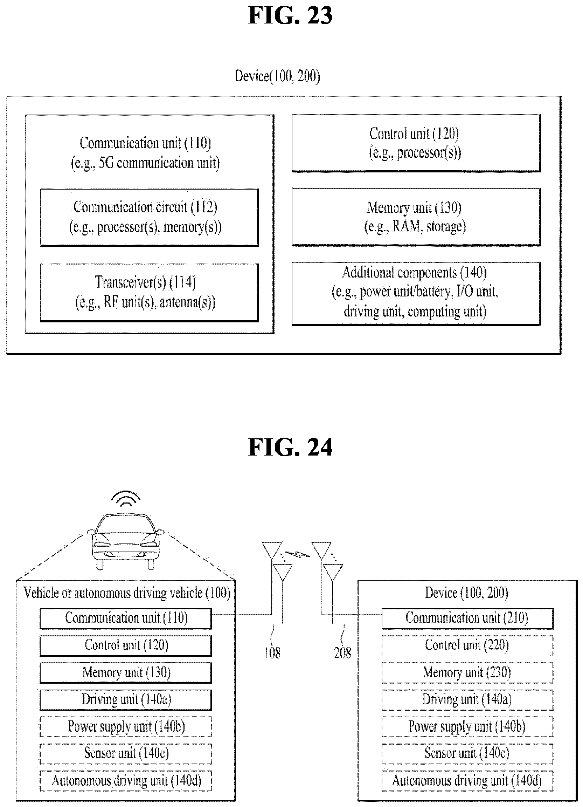

FIG. 23 illustrates another example of a wireless device applied to the present disclosure. The wireless device may be implemented in various forms according to a use-case/service (refer to FIG. 21)

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method of transmitting signals by a first station (STA) in an intelligent transport system (ITS), the method comprising:
acquiring filter information related to a configuration of perceived object information from a second STA;
acquiring a plurality of detection data sets for each object through a plurality of sensors; and
transmitting a vehicle-to-everything (V2X) message including the perceived object information to the second STA, based on the acquired plurality of detection data sets and the filter information,
wherein the first STA determines, based on the filter information, whether to configure the perceived object information through fusion of the acquired plurality of detection data sets or configure the perceived object information with a detection data set for each sensor without the fusion.

2. The method of claim 1, wherein the filter information includes information regarding a processing capability of the second STA.

3. The method of claim 2, wherein based on that the second STA has a higher processing capability than the first STA, the perceived object information is configured with the detection data set for each sensor without the fusion of the acquired plurality of detection data sets.

4. The method of claim 2, wherein based on that the second STA has a lower processing capability than the first STA, the perceived object information is configured through the fusion of the acquired plurality of detection data sets.

5. The method of claim 1, wherein the filter information includes information regarding an area of interest of the second STA, information regarding a confidence level for object perception, information regarding a permissible error range between sensors, information regarding a sensor type, and information regarding whether the fusion is performed on the plurality of detection data sets.

6. The method of claim 1, further comprising transmitting a message including information regarding the plurality of sensors and information indicating that the first STA is capable of configuring the perceived object information without the fusion on the plurality of detection data sets.

7. The method of claim 1, wherein the perceived object information configured with the detection data set for each sensor without the fusion includes information regarding a first object perceived by a first sensor among the plurality of sensors and information regarding the first object perceived by a second sensor among the plurality of sensors.

8. The method of claim 7, wherein the information regarding the first object perceived by the first sensor includes a first sensor identifier (ID), and
wherein the information regarding the first object perceived by the second sensor includes a second sensor ID.

9. A computer-readable recording medium having recorded thereon a program for performing the method of claim 1.

10. A first station (STA) configured to transmit signals in an intelligent transport system (ITS), the first STA comprising:
a transceiver;
a plurality of sensors; and
a processor,
wherein the processor is configured to:
acquire filter information related to a configuration of perceived object information from a second STA;
acquire a plurality of detection data sets for each object through the plurality of sensors; and
transmit a vehicle-to-everything (V2X) message including the perceived object information to the second STA, based on the acquired plurality of detection data sets and the filter information, and
wherein the first STA determines, based on the filter information, whether to configure the perceived object information through fusion of the acquired plurality of detection data sets or configure the perceived object information with a detection data set for each sensor without the fusion.

11. The first STA of claim 10, wherein the filter information includes information regarding a processing capability of the second STA.

12. The first STA of claim 11, wherein based on that the second STA has a higher processing capability than the first STA, the perceived object information is configured with the detection data set for each sensor without the fusion of the acquired plurality of detection data sets.

13. The first STA of claim 11, wherein based on that the second STA has a lower processing capability than the first STA, the perceived object information is configured through the fusion of the acquired plurality of detection data sets.

14. The first STA of claim 11, wherein the filter information includes information regarding an area of interest of the second STA, information regarding a confidence level for object perception, information regarding a permissible error range between sensors, information regarding a sensor type, and information regarding whether the fusion is performed on the plurality of detection data sets.

15. The first STA of claim 11, wherein the processor is configured to transmit a message including information regarding the plurality of sensors and information indicating that the first STA is capable of configuring the perceived object information without the fusion on the plurality of detection data sets.
